# EUROPEAN PATENT SPECIFICATION

(11) **EP 1 520 845 B1**
(45) Date of publication and mention of the grant of the patent: **07.03.2012**
(21) Application number: 04022142.6
(22) Date of filing: 17.09.2004
(51) Int. Cl.: C05F 17/02

(54) **Device and method for composting**
Vorrichtung und Verfahren zur Kompostierung
Appareil et procédé de compostage

(30) Priority: 19.09.2003 CA 2441658
(43) Date of publication of application: 06.04.2005
(73) Proprietor: Dutch Industries Ltd., S0G 3Z0 (CA)
(72) Inventor: Cruson, Izaak P.J., Pilot Butte, Saskatchewan S0G 3Z0 (CA); Peakman, Ken, Balgonie, Saskatchewan S0G 0E0 (CA); Nichols, Trent, Indian Head, Saskatchewan S0G 2K0 (CA); Booy, Michael P., Emerald Park, Saskatchewan S4L 1A6 (CA); Cruson, Brian A., Abbotsford, British Columbia V2S 5N2 (CA); Cruson, Pieter J., Pilot Butte, Saskatchewan 20G 3Z0 (CA)
(74) Representative: Jostarndt, Hans-Dieter

(56) References cited:
- EP-A- 1 264 644
- WO-A-97/37783
- WO-A-2004/029001
- US-A- 4 169 878

## Description

### FIELD OF THE INVENTION

The present invention relates to a composting device and method of use thereof for producing compost material.

### BACKGROUND

The process of composting, in which various organic materials including vegetable matter and animal carcasses and the like are decomposed to produce compost material, is known for making use of the compost material as a soil fertilizer. In many instances the matter is simply left to decompose in a large pile exposed to the elements. Before collecting the matter to be decomposed in a pile it is desirable to break up the matter to expose a larger surface area so that micro organisms can more readily decompose the matter. US patent 3,850,364 to Robbins provides an example of a portable compost grinding apparatus which is suitable for reducing matter to be decomposed into smaller particles to assist in the decomposition process. The actual decomposition of the matter is left to be accomplished by conventional means such as storing in a pile as noted above.

In order to provide improved conditions for composting, it is typical to provide a bin within which matter to be decomposed is placed to produce composted material. US patents 5,890,664 to Conant, 5,843,769 to Jonninen, 5,687,918 to Kubota and 5,948,674 to Mankiewicz disclose examples of composting devices in which mixers are provided to improve efficiency of the composting process by providing fresh air for the micro organisms to consume when decomposing the matter to be composted. In each instance however the matter to be composted is required to be sufficiently prepared by a grinding apparatus as described above for proper operation thereof which is both time consuming and costly when separate components are required.

US patent 3,845,939 to Waldenville describes a composting apparatus including mixing elements to periodically mix the matter to be composted as in some of the previous prior art. A shredder device is provided at the inlet of the compost device to break up matter to be composted into smaller pieces however the particular construction of the shredding elements located in a narrow inlet tube would not permit large items like animal carcasses to be prepared for composting.

EP patent 1 264 644 describes a garbage disposing device, comprising a disposing tank of substantially the inverted-conical shape for storing organic substance such as garbage and fermentation accelerator additives in which fermentation microorganism is seeded beforehand in a sealed condition, a rotation shaft which passes vertically through the disposing tank and is driven to rotate by a motor connected to the lower or upper end thereof, a plurality of cutter blades which are fixed in a cantilevered fashion to the rotation shaft at intervals in the vertical direction for grinding and mixing the fermentation accelerator additive and the organic substance, and a plurality of thermo sensors for detecting the temperatures of the disposing tank at a plurality of portions positioned at intervals in the vertical direction.

WO patent 97/37783 describes a raw refuse disposer for efficiently decomposing raw refuse produced from a kitchen with various germs such as bacteria while storing such charged raw refuse, comprising a raw refuse container having a raw refuse introduction port provided in an upper portion, a discharge port provided in a lower portion and deodorising exhaust ports provided in suitable portions thereof and a raw refuse stirring screw erected in the container so as to be rotatably driven by a driving source, the screw being constructed such that the vane radius of a screw vane gradually decreases toward the top thereof, and that it has a substantially conical shape when viewed sideways.

US patent 4,169,878 describes a composter for the disposal of human and organic kitchen wastes through a continuous aerobic process of decomposition wherein waste matter is moved down a helical or spiral path within a container so that by the time the waste matter reaches the end of the path, all harmful bacteria and pathogens have been destroyed leaving an inert residue suitable for use as fertilizer.

WO patent 2004/029001 describes a composting system including a vertically orientated vessel with a range of mechanisms attached to a vertically orientated central mounted rotating shaft, including rotatable size reduction blade(s), agitation mechanism(s), and discharge blade/mechanism(s). When the system is in use, material introduced to the vessel moves from the upper region of the vessel gravitationally and via agitation through a zone of size reduction to the lower region of the vessel.

Accordingly none of the prior art permits a user to both prepare and efficiently decompose large organic matter to be composted in a single operation using a single piece of equipment.

### SUMMARY

According to one aspect of the present invention there is provided a composter device comprising:
a housing having a composting chamber therein comprising walls and a floor which taper downwardly and inwardly to a bottom end of the composting chamber;
a grinder supported in the composting chamber at the bottom end of the composting chamber, the grinder comprising first and second grinding elements rotatable relative to one another in the composting chamber to produce a shearing action so as to be arranged for grinding objects into ground material to be composted in the composting chamber; and
a mixer rotatably supported about an upright axis in the composting chamber directly above the grinder for mixing the ground material;
the mixer consisting of a member extending upwardly in a direction sloping away from a direction of rotation of the mixer.

According to a second aspect of the present invention there is provided a method of composting an object, the method comprising:
providing a composter having a composting chamber comprising walls and a floor which taper downwardly and inwardly to a bottom end of the composting chamber, a grinder comprising first and second grinding elements supported in the composting chamber at the bottom end of the composting chamber and a mixer rotatably supported about an upright axis in the composting chamber directly above the grinder wherein the mixer consists of a member extending upwardly in a direction sloping away from a direction of rotation of the mixer;
inserting the object into the composting chamber;
grinding the object into a ground material in the composting chamber at the bottom of the composting chamber using the grinder by rotating the first and second elements of the grinder relative to one another to produce a shearing action between the first and second grinding elements;
composting the ground material in the composting chamber; and
mixing the ground material in the composting chamber using the mixer by rotating the arm directly above the grinder as the ground material is composting.

The use of composter device including both a grinder and a mixer in a common compost chamber permits compost matter to be both prepared and decomposed within a single chamber which requires minimal handling or involvement on the part of a user of the composter device. The construction of the composter device readily permits a common drive to be provided on both the grinder and the mixer.

The mixer and the grinder may be rotatably supported together about an upright axis and may be driven by a common drive relative to a surrounding fixed chamber.

The mixer may comprise an auger centrally located within the composting chamber directly above the grinder. Blades may be supported at a periphery of a flighting of the auger at spaced circumferential positions about a periphery thereof. Preferably, the blades are adjustably secured to the flighting of the auger by threaded fasteners. The method may therefore include operating the mixer to urge the ground material upwardly at the center of the composting chamber when mixing.

Alternatively, the mixer may comprise a sweep arm movable about the composting chamber in a sweeping motion adjacent a peripheral wall of the composting chamber. The sweep arm is preferably movable past a ramp bar supported on the peripheral wall which is sloped upwardly in a direction of movement of the sweep arm past the peripheral wall.

For maintaining an optimum composting temperature within the chamber, there may be provided a heater for providing heat to the composting chamber. The heater is preferably supported adjacent a top end of the composting chamber to protect the heater from damage from the material being ground and mixed in the chamber. To further optimize composting temperature, preferably there is provided a vent in communication with a top end of the composting chamber. The vent may remain open at all times or may be controlled to vent only when excessive heat and/or moisture results from the composting process. A cap member on the vent preferably includes a convex surface to prevent collection of condensate thereon.

The grinder may comprise first and second grinding elements rotatable relative to one another to produce a shearing action.

A floor of the composting chamber preferably tapers downwardly and inwardly towards the grinder which is located adjacent a bottom end of the composting chamber.

The composting chamber may include a loading opening at a top end and a discharge opening at a bottom end thereof while being surrounded by insulating material. A discharge chutee may communicate with the opening at the bottom of the composting chamber to project outwardly from the housing. The discharge opening preferably includes a lid which is sealed in a closed position by a resilient sealing member.

The method may include periodically adjusting moisture and temperature within the composting chamber and periodically operating the mixer while the ground material decomposes in the composting chamber. An air pump may be provided, which may be activated responsive to an oxygen sensor in the composting chamber, for adding oxygen for micro-organisms responsible for decomposition to consume. The addition of air by the pump may also be used for controlling temperature or moisture as desired.

### BRIEF DESCRIPTION OF THE DRAWINGS

In the accompanying drawings, which illustrate exemplary embodiments of the present invention:
Figure 1 is a perspective view of a first embodiment of the composter device.

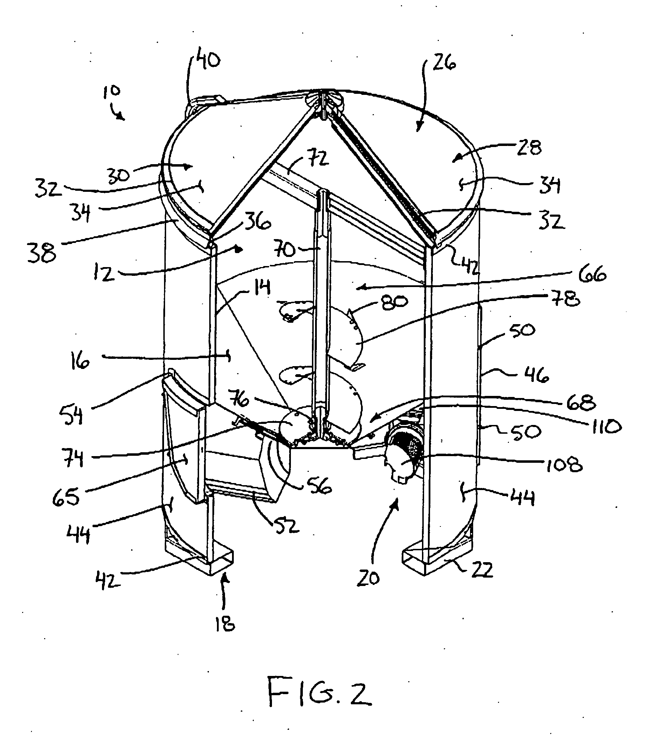

Figure 2 is a perspective view of the device according to Figure 1, shown in partial section.

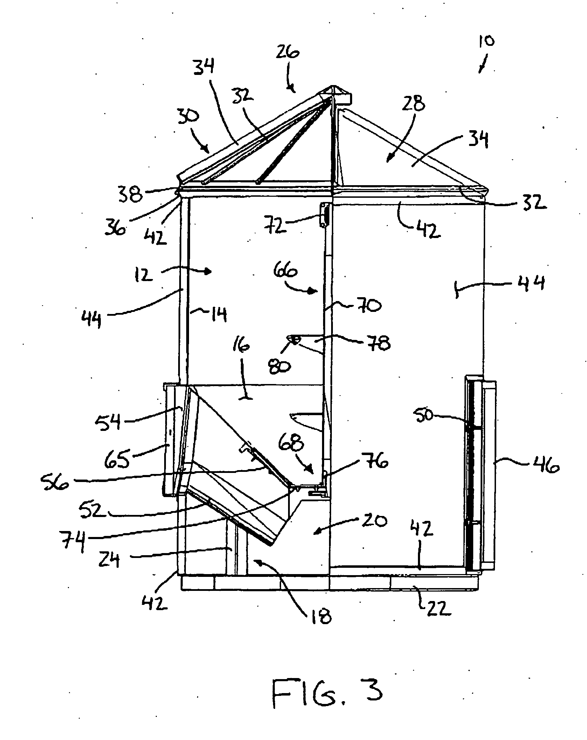

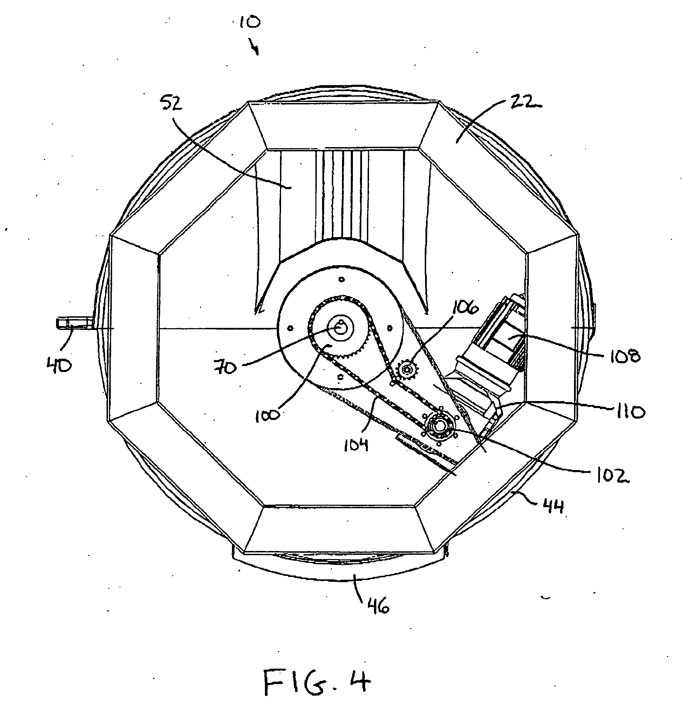

Figure 3 is a partly sectional side elevational view and Figure 4 is a bottom plan view of the composter device according to the first embodiment.

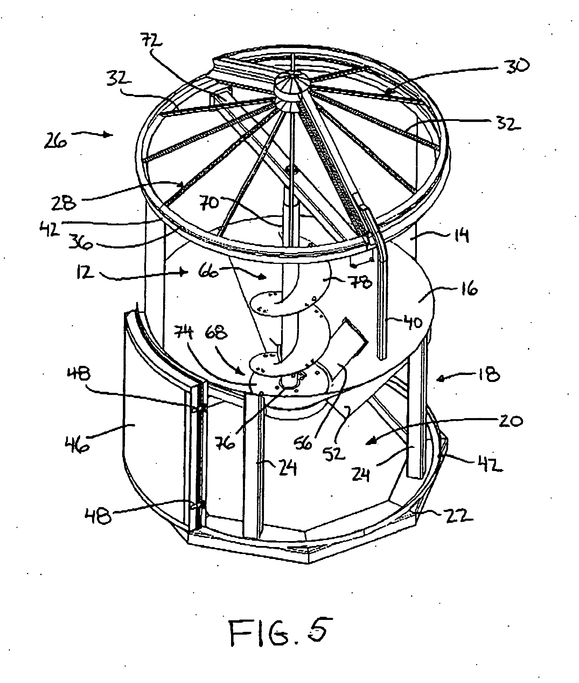

Figure 5 is a perspective view of the composter device of Figure 1 in which the walls and lid panels have been removed for viewing the internal components of the composter device.

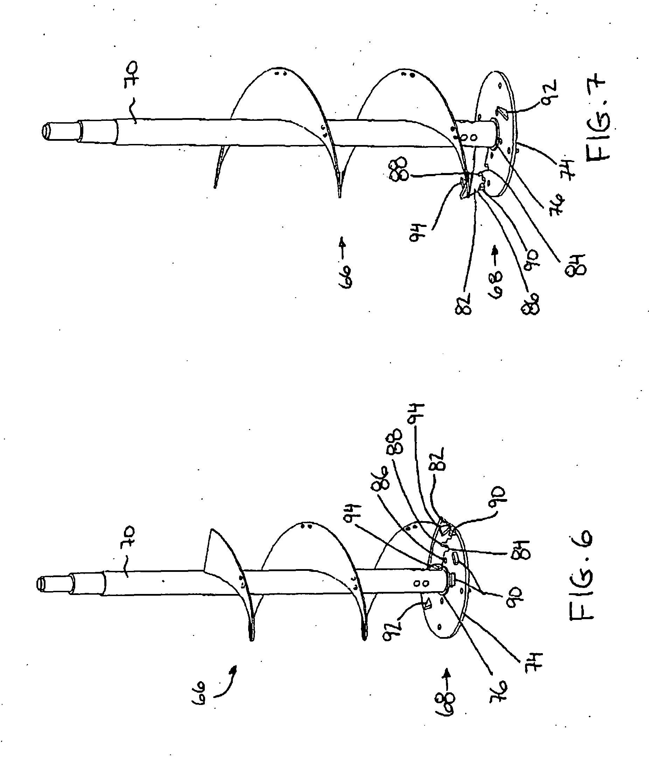

Figures 6 and 7 are perspective views of the components of the grinder and the mixer together as viewed from opposing sides respectively in accordance with the first embodiment.

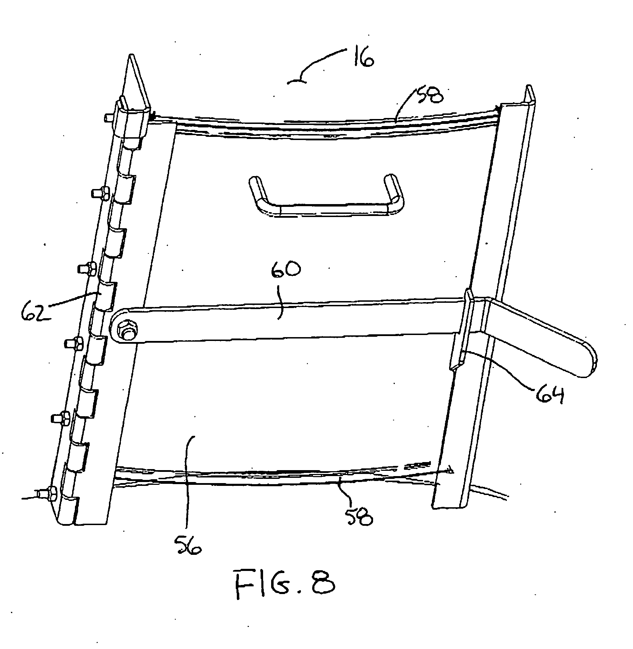

Figure 8 is a perspective view of a discharge door of the compost chamber according to the composter device of Figure 1.

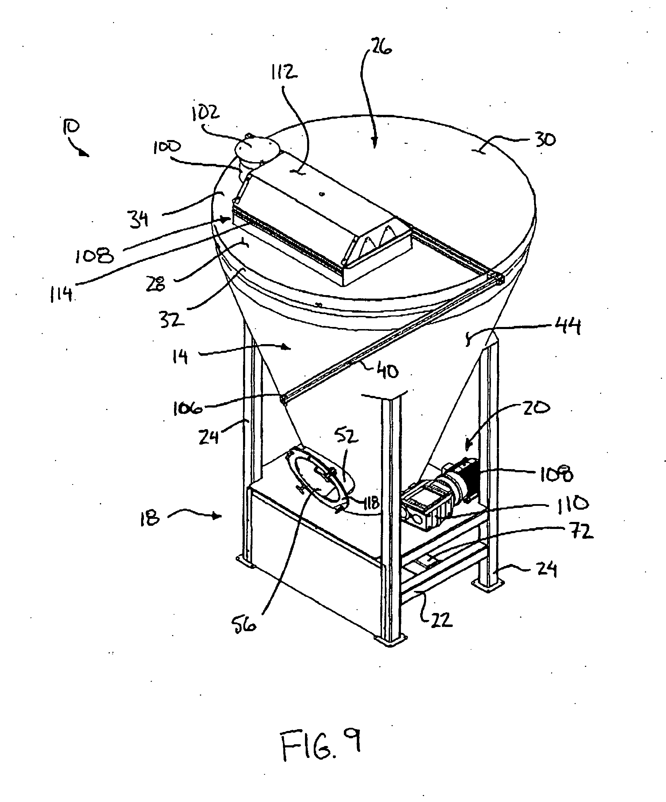

Figure 9 is a perspective view of a second embodiment of the composter device.

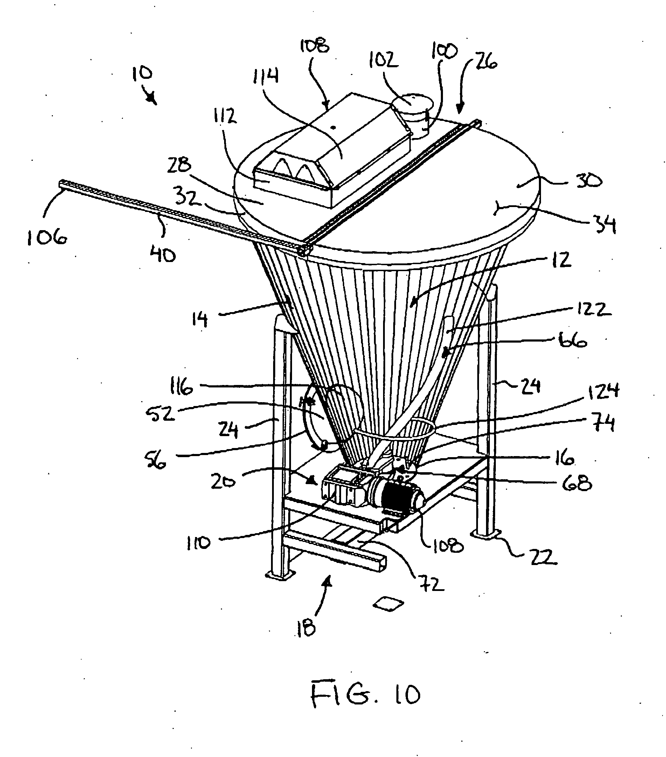

Figure 10 is a partly sectional perspective view of the device according to Figure 9, shown from a different direction.

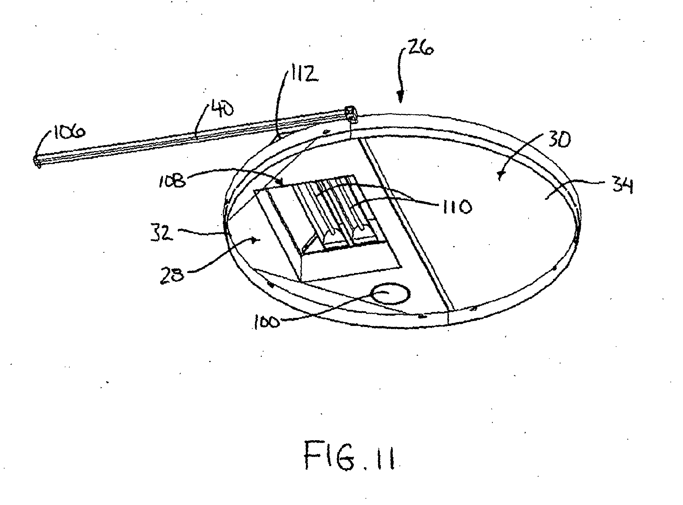

Figure 11 is a perspective view showing a bottom side of the lid of the composter device according to Figure 9.

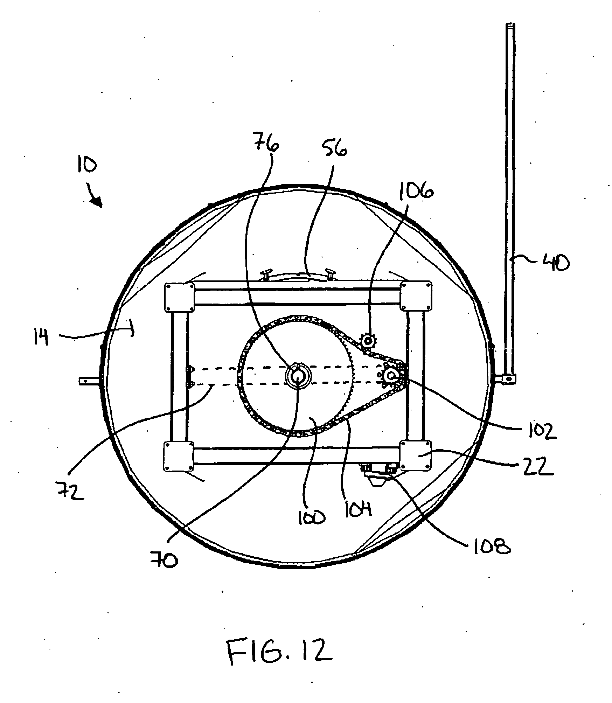

Figure 12 is a bottom plan view of the composter device according to the second embodiment in which a cross beam of the base has been removed for illustrating the drive components of the mixer.

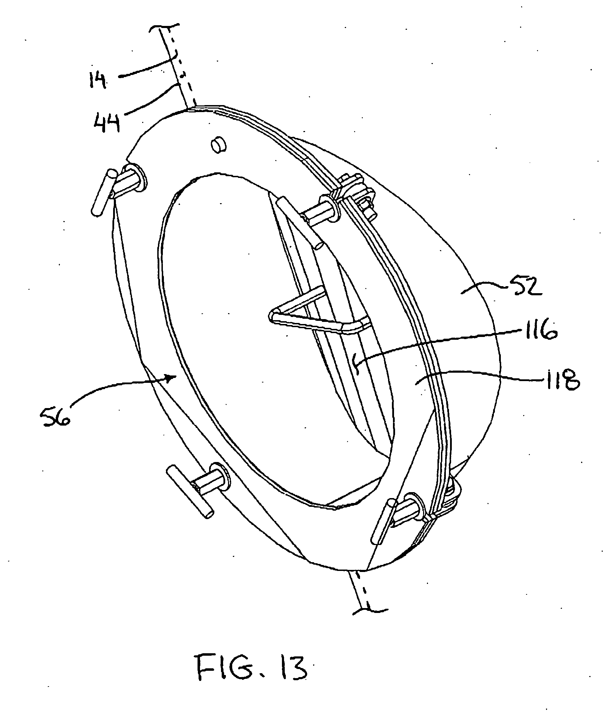

Figure 13 is an enlarged perspective view of the door at the discharge chute of the device according to Figure 9.

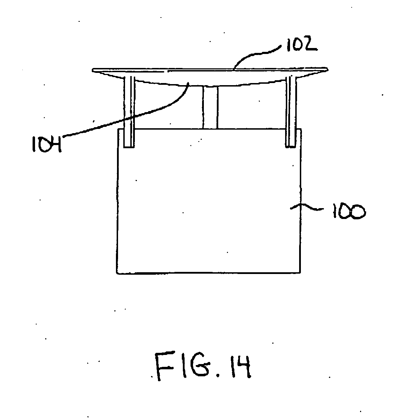

Figure 14 is a side elevational view of the chimney according to the second embodiment.

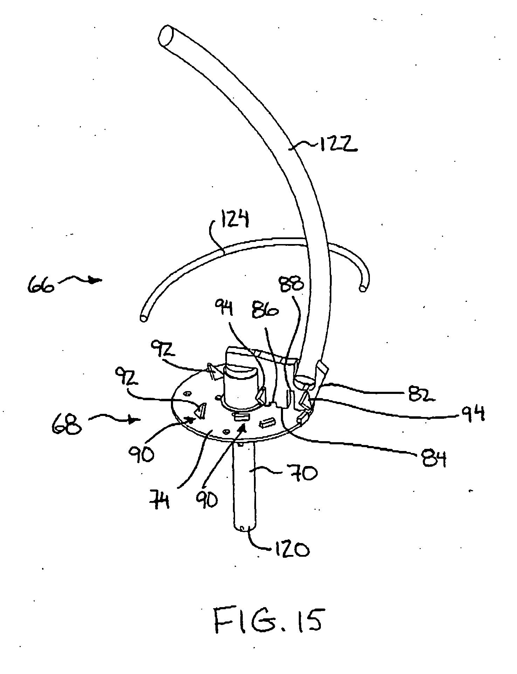

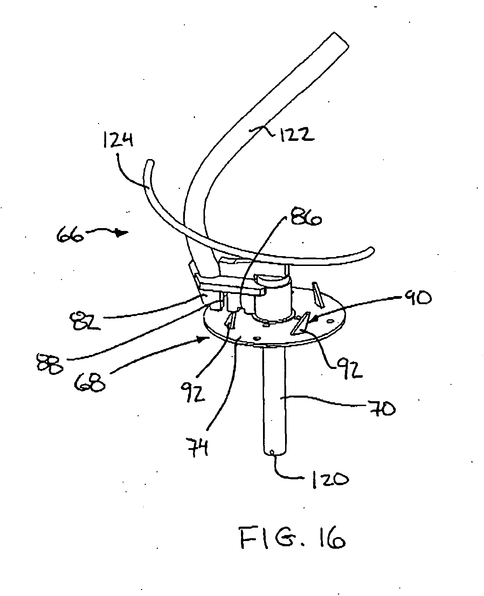

Figure 15 and Figure 16 are perspective views from opposing directions of the mixer and grinder according to the second embodiment.
Figure 17 is a front elevation view of a further embodiment of the mixer.

### DETAILED DESCRIPTION

Referring to the accompanying drawings, there is illustrated a composter device generally indicated by reference numeral 10. In the accompanying Figures, similar reference numerals identify similar components on the different embodiments.

The device 10 is particularly suited for composting material which may require some preparation in the form of grinding and the like, for example when composting animal carcasses and the like. The composter device is fully automated and permits matter to be ground and prepared for decomposition in the same chamber as the decomposition process itself while monitoring such parameters as moisture and heat and mixing time in a single unit.

According to a first embodiment, the device includes a housing locating a composting chamber 12 therein. The composting chamber is a cylindrical upright chamber having cylindrical side walls 14 and a floor 16 which is generally conical in shape tapering downwardly and inwardly to a bottom end of the composting chamber.

A frame 18 supports the composting chamber spaced upwardly from the ground to define a control area 20 therebelow. The frame 18 includes an annular base 22 for being supported on the ground. Uprights 24 span vertically between the base 22 and the floor 16 of the composting chamber at spaced positions about a circumference of the annular base 22.

The cylindrical walls 14 of the composting chamber support a lid 26 thereon. The lid is also generally conical in shape so as to taper inwardly and upwardly towards a top end of the composting device. The lid 26 includes a fixed portion 28 and a movable portion 30 which divide the generally conical shape of the lid into two diametrically opposed halves. The movable portion 30 is slightly larger in dimension than the fixed portion 28 so as to permit the fixed portion 28 to be nested within the movable portion when the movable portion is rotated 180 degrees about a central vertical axis of the composter device to overlap the fixed portion in an open position of the lid.

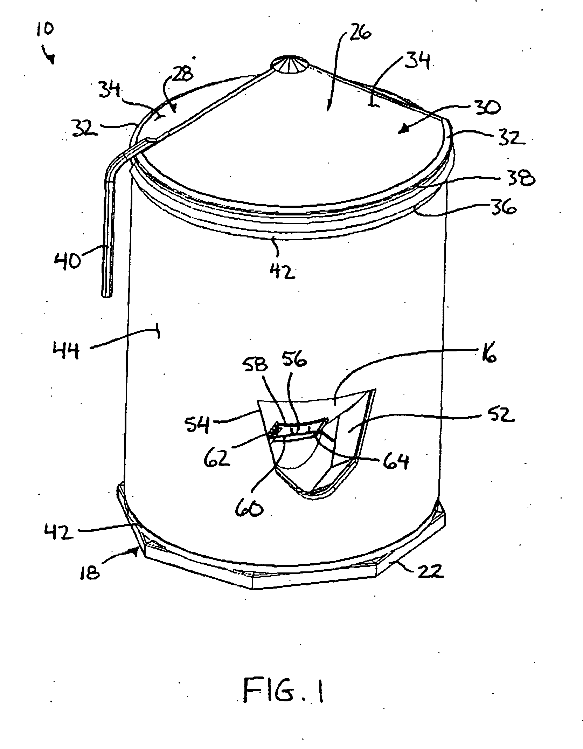

Each of the fixed and movable portions of the lid includes a frame 32 composed of rigid frame members about the periphery and spanning the interior thereof as well as an insulation panel 34 which encloses the panel and fully spans the frame 32. The frame of the fixed portion 28 is fixed on the top side of the cylindrical walls of the composting chamber. The movable portion is pivoted at an apex of the lid 26 and remains slidable at the periphery on an annular frame member 36 encircling the top end of the cylindrical walls 14 and also supporting the fixed portion 28 of the lid thereon. Sealing material is provided at the intersection of the movable portion and the fixed portion as well as about the peripheral edge of the movable portion to fully enclose the top end of the composter device when the fixed and movable portions are positioned side by side in the conical configuration illustrated in Figure 1.

A handle 40 is secured to the frame of the movable portion 30 of the lid to extend outwardly and downwardly along side the composter device to a free end spaced above the ground which can be readily grasped by an operator of the composter device. Opening and closing of the lid is thus accomplished by sliding the movable portion 30 over top of the fixed portion by manually engaging the handle 40 and walking about a circumference of the composter device approximately 180 degrees.

The annular frame member 36 about the top of the.cylindrical walls of the composting chamber and the annular base 22 of the frame of the composter device each include a suitable retaining flange 42 for retaining a cylindrical wall of insulation 44 which fully surrounds the composter device 10. Both the control area and the composting chamber thereabove are surrounded by the insulation 44.

An access door 46 is located in a side of the composter device for communication through the wall of insulation 44 to access the interior of the control area. The access door is similarly formed with frame members and insulation spanning thereacross. Hinges 48 are provided on one side of the door while latches 50 on the opposing side secure the door in a closed position.

A discharge chutee 52 communicates through the wall of insulation 44 below the composting chamber and diametrically opposite to the access door 46. The discharge chutee is an inclined trough extending at a downward and inward incline along a bottom side of the conical floor 16 of the composting chamber from an outlet hatch 54 supported in the wall of insulation 44 to a door 56 formed in the floor 16 of the composting chamber adjacent the bottom end thereof.

The door 56 generally comprises a rigid rectangular panel which fits over the door opening formed in the floor with the edges of the panel overlapping the outer surface of the floor with a sealing material 58 engaged between the panel and the floor. The panel is held frictionally engaged against the door opening by a latch bar 60 arranged to permit the door 56 to be removed when the latch is released. The latch bar 60 generally comprises an elongate bar which is pivoted to a hinge 62 extending along one side of the door opening. The latch bar 60 is of suitable length to span the width of the door panel for being selectively received by a retaining lug 64 on an opposing side of the door opening when in a closed position. By manually releasing the free end of the latch bar 60 from the retaining lug 64, the latch 60 is free to be pivoted with the hinge 62 away from the door opening so that the door 56 is free to be released and removed from the composter device.

A cover 65 mounts at the opening of the discharge chutee through the wall of insulation 44. The cover 65 includes rigid frame elements and insulating materials spanning thereacross in a construction similar to the previously noted external components of the composter device. When the cover 65 is removed, the discharge chutee 52 is suitably sized to receive the feed end of a discharge auger therein for unloading the composter device with an auger as desired.

Components of a mixer 66 and a grinder 68 are supported on a working shaft 70 of the composter device. The working shaft extends vertically through a center of the composter device, co-axially with the walls of the composting chamber and the conical floor 16. A cross beam 72 spans diametrically across a top end of the composting chamber for pivotally supporting a top end of the working shaft 70 therein. A flat circular base plate 74 is mounted at the bottom of the conical floor 16 so that the door 56 of the discharge chutee is positioned directly adjacent the base plate. Suitable bearings 76 are supported in the base plate 74 for centrally locating the bottom end of the working shaft 70 to extend therethrough.

The mixer 66 generally comprises an auger flighting 78 fixed about the shaft for rotation therewith. The flighting spirals upwardly from a bottom end directly adjacent the base plate 74 to a top end terminating at an intermediate point in a height of the composting chamber. Rotation of the working shaft 70 is oriented to urge material in the composting chamber upwardly at a center of the chamber along the mixer 66 in a working direction of the rotation of the shaft. The overall diameter of the flighting 78 is small in relation to the diameter of the composting chamber 12.

A plurality of blades 80 are positioned at spaced positions about the periphery of the flighting 78. Each blade is secured by threaded fasteners to the flighting spaced circumferentially approximately 90 degrees from adjacent ones of the blades 80. In the first illustrated embodiment, the blades project forwardly and outwardly into the direction of rotation however due to the threaded connection of the blades to the flighting, blades of varying aggressive angles relative to the direction of rotation may be provided and replaced as desired.

The grinder 68 includes a first grinding element 82 which is mounted on the working shaft 70 for rotation with the flighting in the shaft directly below the mixer at the bottom end of the flighting and directly adjacent the base plate 74. The first grinding element 82 thus comprises a rigid bar having a bottom edge 84 which rides along the base plate 74 which is fixed in position at the bottom of the composting chamber 12. A set of horizontal slots 86 are provided along the bottom edge to provide an opening at each slot between the grinding element 82 and the plate. At least one vertical slot 88 is also provided and intersects one of the horizontal slots 86 in the illustrated embodiment.

A plurality of second grinding elements 90 remain fixed on the base plate 74 for co-operation with the slots 86 and 88 formed in the first grinding element 82. Each second grinding element 90 comprises a fixed lug in radial alignment, relative to the working shaft, with the horizontal slots 86 and vertical slot 88 respectively. The lugs are suitably sized for a close tolerance fit between the edges of the second grinding elements 90 and the slots formed in the first grinding element 82 to produce a shearing action therebetween when the first grinding element is rotated with the shaft relative to the second grinding elements which remain fixed on the base plate.

The second grinding elements 90 are located at spaced circumferential positions about the shaft for being received through respective slots in the first grinding element at different points of rotation thereof. A vertical grinding element 92 is provided fixed on the base plate 74 for alignment with the vertical slot 88 and includes a sharpened knife edge which confronts the first grinding element 82 at an upward incline towards the first grinding element as the first grinding element is moving towards the vertical grinding element 92 in operation. The inclined edge provides some grip to retain matter to be crushed, for example bones from an animal carcass, during a grinding cycle of the composter device.

Guide teeth 94 are supported at spaced positions on the first grinding element to project into the direction of travel above the slots 86. A forward facing leading edge of the guide teeth 94 projects at a downwardly and inward incline towards the first grinding element for guiding material to be ground downwardly into the slots of the first grinding element. Accordingly as the first grinding element is rotated the matter urged in front of the slots 86 and 88 are crushed by the shearing action of the second grinding elements fixed on the plate rotated through the slots.

The flighting 78 of the mixer 66 and the first grinding element 82 of the grinder 68 are commonly driven on the working shaft 70 which projects below the base plate 74 through the bearing 76 to a bottom end within the control area 20 where a horizontal driven gear 100 is supported on the shaft. The driven gear is coupled to a driving gear 102 by a suitable drive chain 104. An idler gear 106 is provided on a chain tightener to remove slack from the drive chain 104 coupling the driving gear 102 to the driven gear 100. A motor 108 drives a gearbox 110 coupled to the driving gear 102 to provide suitable torque for driving rotation of the grinder to crush matter including bones of an animal carcass and the like.

The control area also locates heating elements (not shown), an air pump (not shown) and a water supply (not shown) for providing heat, fresh air and moisture to the interior of the composting chamber as required to maintain optimum conditions for composting therein. Activation of the air pump provides fresh oxygen for micro-organisms in the composting chamber to consume and assist in the decomposition process. Pumping fresh air into the composting chamber can also affect temperature within the chamber by cooling the compost mixture or by accelerating the decomposition process which produces heat.

The heating elements, the air pump and water supply are conventional equipment that work in co-operation with commercially available temperature, oxygen and moisture sensors (not shown) respectively located in the composting chamber which provide information to a suitable controller (not shown) which respectively determines activation of the heating elements, activation of the air pump and dispensing of water through nozzles of the water supply. This ensures sufficient heat, oxygen and moisture to optimize the decomposition of the matter to be composted by micro-organisms. The controller also controls activation of the motor 108 to provide periodic activation of the mixer 66 to circulate the material in the composting chamber to improve air circulation and evenly distribute micro-organisms to further optimize the composting process.

In further variations, the air pump alone may be used to control either the temperature or the moisture content by activation of the air pump in response to detection by a thermostat that temperature is not within an ideal range or that too much moisture is present such that the matter to be composted requires drying.

According to a second embodiment, the device 10 similarly comprises a housing locating a composting chamber 12 therein. The chamber in this instance is generally conical in shape in which the side walls 14 are sloped downwardly and inwardly continuous with the floor to the bottom end of the composting chamber. The frame 18 similarly supports the composting chamber above a base 22 supported on the ground. Accordingly a similar control area 20 is provided below the compositing chamber for supporting operating components of the composter device. The uprights 24 of the frame span vertically between the base and the walls 14 of the composting chamber at circumferentially spaced positions about the chamber.

The walls 14 of the composting chamber similarly support the lid 26 thereon which is round in shape to span the top end of the composting device. The lid according to the second embodiment also includes the fixed portion 28 and the movable portion 30 which divide the lid into two diametrically opposed halves in which the fixed portion remains fixed relative the housing while the movable portion 30 is pivoted into an open position. The movable portion 30 is hinged relative to the fixed portion along a diametrically and horizontally extending hinge so that the movable portion is pivoted upwardly into the open position. Each of the fixed and movable portions 28 and 30 of the lid includes a peripheral frame 32 composed of rigid members and a panel 34 enclosing the lid which is insulated. Sealing material is provided at an intersection of the movable portion with the fixed portion and the open top edges of the composting chamber to fully enclose the top end to the composter device when fixed and movable portions are positioned side by side as shown in the accompanying Figures.

A vent 100 is provided on the fixed portion of the lid to vent excess heat and moisture from the composting chamber during the composting process. The vent 100 generally comprises an upright collar in communication with a through opening in the fixed portion of the lid which includes an open top end. A lid member 102, which is generally circular of equal or greater diameter than the collar, is positioned directly above the open top end of the collar spaced slightly thereabove to define a gap through which air can be vented. The lid member 102 includes a domed inner surface 104 which is convex in profile so that moisture condensing thereon is encouraged to drip toward the center of the lid member 102 for falling back into the composting chamber rather than accumulating as ice on the lid member in colder climates. The lid member 102 is supported spaced above the collar defining the vent 100 by suitable leg members at circumferentially spaced positions there about.

The handle 40 according to the second embodiment comprises an elongate arm which is fixed onto the movable portion 30 of the lid to extend horizontally outward from the movable portion towards the fixed portion, perpendicularly to the hinge, adjacent one end thereof and spaced radially outward sufficiently that the handle clears the housing of the composting chamber when it is pivoted downwardly. The handle 40 lies on a common plane with the movable portion so that the movable portion is pivoted upwardly into the open position as the handle is pulled downwardly at the free end 106. A suitable rope or chain may be connected to the free end 106 for being suspended therefrom in such a manner that the handle is more readily grasped by a person trying to open the lid while standing on the ground.

A heater 108 is supported in the fixed portion of the lid at the top end of the composting chamber. The heater 108 includes a pair of heating elements 110 which are supported within an external housing 112 of the heater for communication through an opening in the fixed portion of the lid to which the exterior housing 112 is sealed. The external housing 112 includes a hinged access panel 114 which permits access to the heating elements 110 from an external side of the lid so that the heating elements can be readily serviced as desired. Location of the heater in the lid at the top end of the composting chamber protects the components of the heating elements from damage due to the churning material to be composted. The insulation 44 is sprayed on in the second embodiment to provide a full coating about the exterior of the housing for maintaining heat within the composting chamber in colder climates.

The second embodiment also includes the discharge chute 52 which communicates through the wall of insulation 44 to communicate with the bottom discharge opening in the wall of the composting chamber. The chute extends downward and outward at an incline from the conical shaped wall 14 adjacent the bottom side thereof.

A door 56 is similarly provided for closing the discharge chute. The door 56 according to the second embodiment comprises a one piece plug including a flush interior panel 116, a tubular body for being slidably received in the discharge chute and an outer rim flange 118. The outer rim flange 118 sandwiches a layer of rubber sealing material between itself and a cooperating flange at the free end of the discharge chute. Suitable clamping members are provided at circumferentially spaced position about the outer flange 18 for clamping the rubber sealing material between the door 56 and the discharge chute 52 which the door encloses. The flush interior panel 116 is flush with the opening formed in the wall 14 of the composting chamber.

The second embodiment similarly includes the mixer 66 and the grinder 68 which are supported on the working shaft 70 for rotation together about a vertical axis extending through the center of the floor of the composter device co-axially with the conical walls of the composting chamber. The cross beam 72 in the second embodiment spans diametrically across the base 22 of the device for pivotally supporting the free bottom end 120 of the working shaft 70. A flat circular base plat 74 is similarly mounted above the shaft at the bottom of the composting chamber, but at the top end of the working shaft 70. Suitable bearings 76 and a sealing member are similarly supported in the base plate 74 for centrally locating the working shaft therethrough in sealing engagement about the shaft.

The mixer 66 according to the second embodiment generally comprises a sweep arm 122 fixed to the shaft 70 for rotation therewith. The arm 122 spirals upwardly from a bottom end directly adjacent the base plate 74 to a top end terminating at an intermediate point in a height of the composting chamber in a direction which slopes upwardly and away from the direction of rotation in operation. The sweep arm 122 is adjacent the peripheral wall of the composting chamber throughout the length thereof from a gap of approximately one quarter of an inch adjacent the base plate 74 to a maximum gap of approximately one and a half inches adjacent the free top end thereof.

Rotation of the working shaft 70 is similarly oriented to urge material in the composting chamber upwardly at a periphery of the chamber along the mixer 66 in a working direction of the shaft rotation. The overall diameter of the rod forming the sweep arm 122 is approximately three inches so as to be considerably smaller in size and relation to the diameter of the composting chamber 12. A ramp bar 124 is mounted at a fixed position on the peripheral wall of the composing chamber at an intermediate position along the length of the sweep arm 22 The ramp bar 124 is an elongate member extending circumferentially partway about the composting chamber so as to slope upwardly in the direction of the sweep arm 122 sweeping past the bar 124. The bar has a thickness in the order of one inch to substantially fill the gap between the sweep arm 122 and the peripheral wall of the composing chamber at a point of contact therebetween.

The components of the grinder 68 in the second embodiment are substantially identical to those of the first embodiment in which first grinding elements are mounted on the working shaft 70 for rotation with the mixer, below the mixer, at the bottom end of the composting chamber directly adjacent the base plate 74. The first grinding element 82 generally comprises a rigid plate extending radially outward in an upright orientation which supports the sweep arm 122 thereon. A suitable gusset is provided at a trailing side of the grinding element 82 for providing additional structural support to the sweep arm 122.

Slots 86 and 88 are similarly provided along the bottom edge of the first grinding element for cooperation with second grinding elements 90 which remain fixed on the base plate 74 as described in accordance with the first embodiment. Accordingly the second grinding elements similarly comprise lugs which produce a sheering action when the slots of the first grinding element are rotated past the second grinding elements. The second grinding elements are located at spaced circumferential positions about the shaft. A plurality of vertical grinding elements 92 are also provided, each having a knife edge inclined upwardly into the direction of rotation to confront the first grinding element as described above. Guide teeth 94 are also provided on the first grinding element as described above with regard to the first embodiment.

The sweep arm 122 and the first grinding element are commonly driven on the working shaft 70 by the horizontal driven gear 100 supported on the shaft below the base plate 74. A driving gear 102, a drive chain 104 and the idler gear 106 of the first embodiment are all similarly arranged for being driven by a motor 108 and gear box combination.

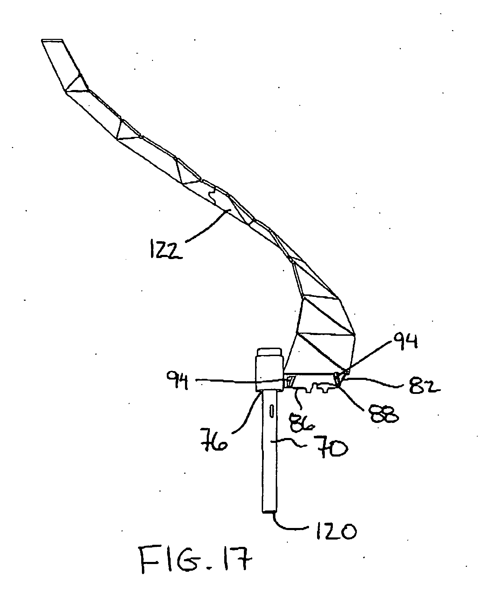

Turning now to Figure 17, a further embodiment of the sweep arm 122 is illustrated which similarly spirals upwardly adjacent a periphery of the composting chamber walls to be sloped upwardly and away from the direction of rotation of the shaft. The sweep arm 122 according to the embodiment of Figure 17 comprises a broad plate member, as opposed to a solid rod, which is close in tolerance to the wall of the composting chamber to provide a minimum gap therebetween. The broad flat surface assists in churning the material to be composted by encouraging the material to ride up the broad flat surface of the sweep arm 122 as the arm is rotated about the periphery of the composting chamber. No ramp bar is thus required in this instance.

In further embodiments various control features maybe provided for controlling the amount of air, water and heat provided to the material to be composted. The vent 100, for instance, maybe provided with a closable lid which is selectively opened only when excess heat is to be removed at selected times during the composting process.

In use, the lid 26 of the composter device is first opened to permit loading of the composting chamber through the opening formed in the top end of the device. Material to be composted may include various types of organic matter. When composting an animal carcass, additional cellulose fibre or material in the form of straw or sawdust is added along with any moisture required so that the desired mixture has a moisture approximately in the range of 50%. Once loaded, the lid is closed and sealed shut and the grinding operation begins by steadily rotating the working shaft with the first grinding element supported thereon for a prescribed period of time until the matter to be composted is sufficiently ground into a ground material having a particle size which is sufficiently reduce to optimize the composting process.

Rotation of the working shaft can then be stopped to permit the material to be composted to remain in the composting chamber for decomposition. During the decomposition period moisture levels and temperature are periodically checked automatically by the controller. An ideal temperature range is maintained between 130 and 150 degrees Fahrenheit. The compositing period in which the matter remains in the composting chamber for decomposition is typically in the order of approximately 100 hours during which the motor is periodically activated to rotate the mixer 66 to stir the ground matter to be composted so that air is circulated through the mixture. The periodic intervals of stirring by the mixer are preset again for optimized decomposition.

During the mixing process rotation of the working shaft causes the mixer to rotate in a manner in which the ground matter to be decomposed rises up along the mixer, either at the center or at the periphery of the composting chamber depending upon the embodiment. The matter to be composted is subsequently permitted to fall down from the top of the mixer in a churning action until the matter is once again gathered by the mixer due to the downward and inwardly taper of the walls 14 which guide the decomposing matter to the bottom of the mixer. Further mixing is provided by the grinder 68 due to the guide teeth 94 which urges matter down into the slots for being subjected to the crushing and shearing action of the second grinding elements passing through the slots in the first grinding element rotated past it. Once the decomposition process has been sufficiently completed, the discharge chutee is opened at the door 56 so that an auger placed near or in the discharge chutee can unload the decomposed matter through the door opening.

While various embodiments of the present invention have been described in the foregoing, it is to be understood that other embodiments are possible within the scope of the invention. The invention is to be considered limited solely by the scope of the appended claims.

## Claims

1. A composter device comprising:
a housing having a composting chamber therein comprising walls and a floor which taper downwardly and inwardly to a bottom end of the composting chamber,
a grinder supported in the composting chamber at the bottom end of the composting chamber, the grinder comprising first and second grinding elements rotatable relative to one another in the composting chamber to produce a shearing action so as to be arranged for grinding objects into ground material to be composted in the composting chamber; and
a mixer rotatably supported about an upright axis in the composting chamber directly above the grinder for mixing the ground material;
the mixer consisting of a member extending upwardly in a direction sloping away from a direction of rotation of the mixer.

2. The device according to Claim 1 wherein the mixer and the grinder are rotatably supported about the upright axis for rotation relative to the composting chamber which remains fixed.

3. The device according to Claim 1 wherein the member of the mixer comprises a sweep arm movable about the composting chamber in a sweeping motion, the sweep arm spiralling upwardly in the direction sloping away from the direction of rotation of the sweep arm and the sweep arm being adjacent a peripheral wall of the composting chamber throughout a length of the sweep arm.

4. The device according to Claim 3 wherein the sweep arm is movable past a ramp bar fixedly supported on the peripheral wall, the ramp bar being sloped upwardly in a direction of movement of the sweep arm past the peripheral wall.

5. The device according to Claim 1 wherein the grinder and the mixer are supported for rotation together.

6. The device according to Claim 1 wherein one of the grinding elements comprises a rigid member including a slot formed therein and the other grinding element comprises a lug which closely fits within the slot to produce the shearing action when the grinding elements are rotated relative to one another.

7. The device according to Claim 6 wherein the rigid member includes a plurality of slots of different configuration formed therein and the other grinding element comprises a plurality of lugs which closely fit within the slots respectively to produce the shearing action.

8. The device according to Claim 1 wherein there is provided a vent in communication with a top end of the composting chamber.

9. The device according to Claim 1 wherein one of the grinding elements includes an edge which extends at an upward incline towards the other grinding element to confront the other grinding element as the grinding elements are rotated towards one another.

10. The device according to Claim 1 wherein the composting chamber includes a loading opening at a top end and a discharge opening at a bottom end thereof.

11. The device according to Claim 10 wherein the discharge opening includes a lid which is sealed in a closed position by a resilient sealing member.

12. The device according to Claim 1 wherein there is provided a discharge chute projecting outwardly from a bottom end of the composting chamber.

13. The device according to Claim 1 wherein there is provided a heater for providing heat to the composting chamber, the heater being supported adjacent a top end of the composting chamber.

14. A method of composting an object, the method comprising:
providing a composter having a composting chamber comprising walls and a floor which taper downwardly and inwardly to a bottom end of the composting chamber, a grinder comprising first and second grinding elements supported in the composting chamber at the bottom end of the composting chamber and a mixer rotatably supported about an upright axis in the composting chamber directly above the grinder wherein the mixer comprises a member extending upwardly in a direction sloping away from a direction of rotation of the mixer;
inserting the object into the composting chamber;
grinding the object into a ground material in the composting chamber at the bottom of the composting chamber using the grinder by rotating the first and second elements of the grinder relative to one another to produce a shearing action between the first and second grinding elements;
composting the ground material in the composting chamber; and
mixing the ground material in the composting chamber using the mixer by rotating the arm directly above the grinder as the ground material is composting.

15. The method according to Claim 14 wherein the grinder and the mixer are rotated about the upright axis during grinding and mixing operations respectively while the composting chamber remains fixed.

16. The method according to Claim 14 wherein one of the grinding elements includes an edge which extends at an upward incline towards the other grinding element to confront the other grinding element as the grinding elements are rotated towards one another.

17. The method according to Claim 14 including driving rotation of the mixer and the grinder with a common drive.

18. The method according to Claim 14 wherein one of the grinding elements comprises a rigid member including a slot formed therein and the other grinding element comprises a lug which closely fits within the slot to produce the shearing action when the grinding elements are rotated relative to one another.

19. The method according to Claim 14 wherein the member of the mixer comprises a sweep arm spiralling upward in the direction sloping away from the direction of rotation of the sweep arm adjacent a peripheral wall of the composting chamber throughout a length of the sweep arm and wherein the method includes mixing the ground material by sweeping the sweep arm about the composting chamber.

20. The method according to Claim 19 including providing a ramp bar fixedly supported on the peripheral wall and which is inclined upwardly in a direction of sweeping motion of the sweep arm and sweeping the sweep arm past the ramp bar.

## Patentansprüche

1. Kompostiervorrichtung, umfassend:
ein Gehäuse, das eine Kompostierkammer darin aufweist, die Wände und einen Boden umfasst, die nach unten und innen zu einem unteren Ende der Kompostierkammer geneigt sind,
eine Mahlvorrichtung, die in der Kompostierkammer am unteren Ende der Kompostierkammer gehalten ist, wobei die Mahlvorrichtung erste und zweite Mahlelemente umfasst, die sich in der Kompostierkammer relativ zueinander drehen können, um eine Scherwirkung zu erzeugen, so dass sie zum Mahlen von Objekten zu gemahlenem Material, das in der Kompostierkammer kompostiert werden soll, angeordnet sind und
einen Mischer, der um eine senkrechte Achse drehbar in der Kompostierkammer unmittelbar über der Mahlvorrichtung, zum Vermischen des gemahlenen Materials, gehalten ist,
wobei der Mischer aus einem Element besteht, das in einer Richtung, die von einer Drehrichtung des Mischers weg geneigt ist, nach oben verläuft.

2. Vorrichtung nach Anspruch 1, wobei der Mischer und die Mahlvorrichtung um die senkrechte Achse drehbar gehalten sind, um sich relativ zur Kompostierkammer, die unbeweglich bleibt, zu drehen.

3. Vorrichtung nach Anspruch 1, wobei das Element des Mischers einen Schwenkarm umfasst, der um die Kompostierkammer herum in einer Schwenkbewegung bewegt werden kann, wobei der Schwenkarm in der Richtung, die von der Drehrichtung des Schwenkarms weg geneigt ist, spiralförmig nach oben verläuft und der Schwenkarm über eine Länge des Schwenkarms an eine umlaufende Wand der Kompostierkammer angrenzt.

4. Vorrichtung nach Anspruch 3, wobei der Schwenkarm an einem Schrägstab vorbei bewegt werden kann, der unbeweglich an der umlaufenden Wand gehalten ist, wobei der Schrägstab in einer Richtung der Bewegung des Schwenkarms an der umlaufenden Wand vorbei nach oben geneigt ist.

5. Vorrichtung nach Anspruch 1, wobei die Mahlvorrichtung und der Mischer gehalten sind, um sich gemeinsam zu drehen.

6. Vorrichtung nach Anspruch 1, wobei eins der Mahlelemente ein starres Element umfasst, das einen darin geformten Schlitz enthält, und das andere Mahlelement einen Ansatz umfasst, der genau in den Schlitz passt, um die Scherwirkung zu erzeugen, wenn die Mahlelemente relativ zueinander gedreht werden.

7. Vorrichtung nach Anspruch 6, wobei das starre Element eine Vielzahl von darin geformten Schlitzen mit unterschiedlicher Gestaltung enthält, und das andere Mahlelement eine Vielzahl von Ansätzen umfasst, die jeweils genau in die Schlitze passen, um die Scherwirkung zu erzeugen.

8. Vorrichtung nach Anspruch 1, wobei eine mit einem oberen Ende der Kompostierkammer in Verbindung stehende Entlüftungsöffnung vorgesehen ist.

9. Vorrichtung nach Anspruch 1, wobei eins der Mahlelemente eine Kante aufweist, die in einer Aufwärtsschräge in Richtung des anderen Mahlelements verläuft, um auf das andere Mahlelement zu treffen, wenn die Mahlelemente aufeinander zu gedreht werden.

10. Vorrichtung nach Anspruch 1, wobei die Kompostierkammer eine Befüllöffnung an einem oberen Ende und eine Entnahmeöffnung an einem unteren Ende davon aufweist.

11. Vorrichtung nach Anspruch 10, wobei die Entnahmeöffnung einen Deckel aufweist, der in einer geschlossenen Position mit einem elastischen Dichtelement abgedichtet ist.

12. Vorrichtung nach Anspruch 1, wobei eine Entnahmerutsche, die aus einem unteren Ende der Kompostierkammer hinausragt, vorgesehen ist.

13. Vorrichtung nach Anspruch 1, wobei eine Heizvorrichtung zum Abgeben von Wärme an die Kompostierkammer vorgesehen ist, wobei die Heizvorrichtung angrenzend an ein oberes Ende der Kompostierkammer gehalten ist.

14. Verfahren zum Kompostieren eines Objekts, wobei das Verfahren Folgendes umfasst:
Bereitstellen eines Komposters, der eine Kompostierkammer aufweist, die Wände und einen Boden umfasst, die nach unten und innen zu einem unteren Ende der Kompostierkammer geneigt sind, eine Mahlvorrichtung, die erste und zweite Mahlelemente umfasst und in der Kompostierkammer am unteren Ende der Kompostierkammer gehalten ist, und einen Mischer, der um eine senkrechte Achse drehbar in der Kompostierkammer unmittelbar über der Mahlvorrichtung gehalten ist, wobei der Mischer ein Element umfasst, das in einer Richtung, die von einer Drehrichtung des Mischers weg geneigt ist, nach oben verläuft,
Einfüllen des Objekts in die Kompostierkammer,
Mahlen des Objekts zu einem gemahlenen Material in der Kompostierkammer am Boden der Kompostierkammer unter Verwendung der Wahlvorrichtung durch Drehen der ersten und zweiten Elemente der Mahlvorrichtung relativ zueinander, um eine Scherwirkung zwischen dem ersten und zweiten Mahlelement zu erzeugen,
Kompostieren des gemahlenen Materials in der Kompostierkammer, und
Vermischen des gemahlenen Materials in der Kompostierkammer unter Verwendung des Mischers durch Drehen des Arms unmittelbar über der Mahlvorrichtung, während das gemahlene Material kompostiert wird.

15. Verfahren nach Anspruch 14, wobei die Mahlvorrichtung und der Mischer während des Mahlbeziehungsweise Mischvorgangs um die senkrechte Achse gedreht werden, während die Kompostierkammer unbeweglich bleibt.

16. Verfahren nach Anspruch 14, wobei eins der Mahlelemente eine Kante aufweist, die in einer Aufwärtsschräge in Richtung des anderen Mahlelements verläuft, um auf das andere Mahlelement zu treffen, wenn die Mahlelemente aufeinander zu gedreht werden.

17. Verfahren nach Anspruch 14, umfassend das In-Drehung-Versetzen des Mischers und der Mahlvorrichtung mit einem gemeinsamen Antrieb.

18. Verfahren nach Anspruch 14, wobei eins der Mahlelemente ein starres Element umfasst, das einen darin geformten Schlitz umfasst, und das andere Mahlelement einen Ansatz umfasst, der genau in den Schlitz passt, um die Scherwirkung zu erzeugen, wenn die Mahlelemente relativ zueinander gedreht werden.

19. Verfahren nach Anspruch 14, wobei das Element des Mischers einen Schwenkarm umfasst, der angrenzend an eine umlaufende Wand der Kompostierkammer über eine Länge des Schwenkarms in der Richtung, die von der Drehrichtung des Schwenkarms weg geneigt ist, spiralförmig nach oben verläuft, und wobei das Verfahren das Vermischen des gemahlenen Materials durch Schwenken des Schwenkarms um die Kompostierkammer herum umfasst.

20. Verfahren nach Anspruch 19, umfassend das Bereitstellen eines Schrägstabs, der unbeweglich an der umlaufenden Wand gehalten ist und in einer Richtung der Schwenkbewegung des Schwenkarms nach oben geneigt ist, und das Schwenken des Schwenkarms an dem Schrägstab vorbei.

## Revendications

1. Dispositif composteur comprenant :
un logement présentant une chambre de compostage à l'intérieur, comprenant des parois et un sol en pente vers le bas et vers l'intérieur en direction d'une extrémité inférieure de la chambre de compostage,
un broyeur tenu dans la chambre de compostage à l'extrémité inférieure de la chambre de compostage, le broyeur comprenant des premier et second éléments de broyage rotatifs l'un par rapport à l'autre dans la chambre de compostage pour produire une action de cisaillement, de sorte qu'ils sont agencés pour broyer des objets en une matière broyée destinée à être compostée dans la chambre de compostage ; et
un mixeur tenu de manière à pouvoir tourner sur un axe vertical dans la chambre de compostage directement au-dessus du broyeur pour mélanger la matière broyée ;
le mixeur consistant en un élément s'étendant vers le haut dans une direction s'éloignant en s'inclinant d'une direction de rotation du mixeur.

2. Dispositif selon la revendication 1, dans lequel le mixeur et le broyeur sont tenus de manière à pouvoir tourner autour de l'axe vertical pour tourner par rapport à la chambre de compostage qui reste fixe.

3. Dispositif selon la revendication 1, dans lequel l'élément du mixeur comprend un bras de balayage mobile autour de la chambre de compostage dans un mouvement de balayage, le bras de balayage effectuant des spirales vers le haut dans la direction s'éloignant en s'inclinant de la direction de rotation du bras de balayage, et le bras de balayage étant adjacent à une paroi périphérique de la chambre de compostage sur une longueur du bras de balayage.

4. Dispositif selon la revendication 3, dans lequel le bras de balayage est mobile au-delà d'une barre de rampe tenue de manière fixe sur la paroi périphérique, la barre de rampe étant inclinée vers le haut dans une direction de mouvement du bras de balayage au-delà de la paroi périphérique.

5. Dispositif selon la revendication 1, dans lequel le broyeur et le mixeur sont tenus pour tourner ensemble.

6. Dispositif selon la revendication 1, dans lequel l'un des éléments de broyage comprend un élément rigide comprenant une fente formée à l'intérieur et l'autre élément de broyage comprend un ergot qui s'insère étroitement à l'intérieur de la fente pour produire l'action de cisaillement lorsque les éléments de broyage sont tournés l'un par rapport à l'autre.

7. Dispositif selon la revendication 6, dans lequel l'élément rigide comprend une pluralité de fentes de configuration différente formées dans l'élément, et l'autre élément de broyage comprend une pluralité d'ergots qui s'insèrent étroitement à l'intérieur des fentes respectivement pour produire l'action de cisaillement.

8. Dispositif selon la revendication 1, dans lequel un évent en communication avec une extrémité supérieure de la chambre de compostage est prévu.

9. Dispositif selon la revendication 1, dans lequel l'un des éléments de broyage comprend un bord qui s'étend en s'inclinant vers le haut en direction de l'autre élément de broyage pour faire face à l'autre élément de broyage lorsque les éléments de broyage sont tournés l'un vers l'autre.

10. Dispositif selon la revendication 1, dans lequel la chambre de compostage comprend une ouverture de chargement à une extrémité supérieure et une ouverture de déchargement à une extrémité inférieure de celle-ci.

11. Dispositif selon la revendication 10, dans lequel l'ouverture de déchargement comprend un couvercle qui est fermé hermétiquement dans une position de fermeture par un élément de fermeture hermétique élastique.

12. Dispositif selon la revendication 1, dans lequel il est prévu une goulotte de décharge faisant saillie vers l'extérieur depuis une extrémité inférieure de la chambre de compostage.

13. Dispositif selon la revendication 1, dans lequel il est prévu un chauffage pour fournir de la chaleur à la chambre de compostage, le chauffage étant tenu de manière adjacente à une extrémité supérieure de la chambre de compostage.

14. Procédé de compostage d'un objet, le procédé comprenant :
la fourniture d'un composteur présentant une chambre de compostage comprenant des parois et un sol en pente vers le bas et vers l'intérieur en direction d'une extrémité inférieure de la chambre de compostage, un broyeur comprenant des premier et second éléments de broyage tenu dans la chambre de compostage sur l'extrémité inférieure de la chambre de compostage, et un mixeur tenu de manière à pouvoir tourner sur un axe vertical dans la chambre de compostage directement au-dessus du broyeur, dans lequel le mixeur comprend un élément s'étendant vers le haut dans une direction s'éloignant en s'inclinant d'une direction de rotation du mixeur ;
l'insertion de l'objet dans la chambre de compostage ;
le broyage de l'objet en une matière broyée dans la chambre de compostage sur le fond de la chambre de compostage en utilisant le broyeur en faisant tourner les premier et second éléments du broyeur l'un par rapport à l'autre pour produire une action de cisaillement entre les premier et second éléments de broyage ;
le compostage de la matière broyée dans la chambre de compostage ; et
le mélange de la matière broyée dans la chambre de compostage en utilisant le mixeur en tournant le bras directement au-dessus du broyeur lorsque la matière broyée est en train de composter.

15. Procédé selon la revendication 14, dans lequel le broyeur et le mixeur tournent sur l'axe vertical pendant les opérations de broyage et de mixage respectives, alors que la chambre de compostage reste fixe.

16. Procédé selon la revendication 14, dans lequel l'un des éléments de broyage comprend un bord qui s'étend en s'inclinant vers le haut en direction de l'autre élément de broyage pour faire face à l'autre élément de broyage lorsque les éléments de broyage sont tournés l'un vers l'autre.

17. Procédé selon la revendication 14, incluant l'entraînement de la rotation du mixeur et du broyeur par un entraînement commun.

18. Procédé selon la revendication 14, dans lequel l'un des éléments de broyage comprend un élément rigide incluant une fente formée dans l'élément et l'autre élément de broyage comprend un ergot qui s'insère étroitement à l'intérieur de la fente pour produire l'action de cisaillement lorsque les éléments de broyage sont tournés l'un par rapport à l'autre.

19. Procédé selon la revendication 14, dans lequel l'élément du mixeur comprend un bras de balayage effectuant des spirales vers le haut dans la direction s'éloignant en s'inclinant de la direction de rotation du bras de balayage adjacent à une paroi périphérique de la chambre de compostage sur une longueur du bras de balayage et dans lequel le procédé comprend le mélange de la matière broyée en balayant le bras de balayage autour de la chambre de compostage.

20. Procédé selon la revendication 19, comprenant de prévoir une barre de rampe tenue de manière fixe sur la paroi périphérique et qui est inclinée vers le haut dans une direction de mouvement du bras de balayage et balayant le bras de balayage au-delà de la barre de rampe.
